# FASCICULE DE BREVET EUROPEEN

(11) **EP 4 147 069 B1**
(45) Date de publication et mention de la délivrance du brevet: **20.12.2023**
(21) Numéro de dépôt: 21731226.3
(22) Date de dépôt: 23.04.2021
(51) Int. Cl.: G01S 7/4912, G01S 17/58

(54) **DETECTION ET TELEMETRIE PAR IMPULSIONS DE RAYONNEMENT ELECTROMAGNETIQUE**
DETEKTION UND TELEMETRIE DURCH IMPULSE ELEKTROMAGNETISCHER STRAHLUNG
DETECTION AND TELEMETRY BY ELECTROMAGNETIC RADIATION PULSES

(30) Priorité: 06.05.2020 FR 2004482
(43) Date de publication de la demande: 15.03.2023
(73) Titulaire: Office National d'Etudes et de Recherches Aérospatiales, 91120 Palaiseau (FR)
(72) Inventeur: MICHEL, David Tomline, 91400 ORSAY (FR); MUGNIER, Laurent, 92190 MEUDON (FR); VALLA, Matthieu, 91360 EPINAY SUR ORGE (FR)
(74) Mandataire: Plasseraud IP
(86) Numéro de dépôt international: PCT/FR2021/050711
(87) Numéro de publication internationale: WO 2021/224560

(56) Documents cités:
- FR-A1- 2 965 064
- FR-A1- 3 022 349
- US-A1- 2007 171 396

## Description

### Domaine technique

La présente description concerne un procédé et un système de détection et de télémétrie par impulsions de rayonnement électromagnétique, notamment pour effectuer des mesures anémométriques.

### Technique antérieure

Des systèmes de détection et de télémétrie par impulsions de rayonnement électromagnétique sont utilisés pour de nombreuses applications, notamment pour caractériser des écoulements fluides. Les impulsions de rayonnement sont émises en direction d'une zone d'exploration qui est susceptible de contenir une ou plusieurs cibles à caractériser, et une partie de chaque impulsion qui est rétrodiffusée ou rétroréfléchie par chaque cible est détectée en retour par le système. Dans le cas d'un écoulement fluide à caractériser, les cibles sont constituées par des particules rétrodiffusantes qui sont présentes en suspension dans le fluide, et qui sont entraînées en mouvement conformément à la vitesse du fluide à chaque endroit dans la zone d'exploration. Pour des écoulements atmosphériques, les cibles sont constituées par des gouttelettes d'aérosols, des poussières, des grains de glace, etc. qui sont en suspension dans l'air.

De tels systèmes de détection et de télémétrie par impulsions de rayonnement électromagnétique peuvent être de type LIDAR, pour «Light Détection And Ranging» en anglais ou détection et télémétrie par de la lumière, ou de type RADAR, pour «Radio Détection And Ranging» en anglais ou détection et télémétrie par ondes radio. Pour les systèmes LIDAR, le rayonnement émis est de type laser, avec une fréquence de ce rayonnement qui est couramment comprise entre 30 THz (Terahertz) et 1200 THz environ, correspondant à une longueur d'onde comprise entre 250 nm (nanomètre) et 10 µm (micromètre) environ. Pour les systèmes RADAR, la fréquence d'onde radio utilisée est couramment comprise entre 3 MHz (mégahertz) et 300 GHz (gigahertz). Les systèmes RADAR à haute fréquence correspondent à des longueurs d'onde du rayonnement qui sont comprises entre 1 mm (millimètre) et 7,5 mm, typiquement.

L'utilisation de tels systèmes pour caractériser une cible unique, ou quelques cibles, chacune par une valeur de distance d'éloignement et une valeur de vitesse radiale, est bien maîtrisée lorsque le nombre de cibles qui contribuent simultanément au signal de mesure est faible, et/ou que les valeurs respectives de distance d'éloignement et de vitesse radiale des cibles sont bien séparées les unes des autres. Mais dans le cas d'écoulements fluides à caractériser, les cibles rétrodiffusantes sont réparties continûment dans la zone d'exploration qui est concernée par chaque mesure, et possèdent des valeurs de vitesse radiale qui varient continûment. La détermination de la distribution de vitesse radiale en fonction de la distance d'éloignement est alors beaucoup plus difficile.

Une méthode connue pour déterminer la distribution de vitesse radiale en fonction de la distance d'éloignement, en utilisant un système de détection et de télémétrie par impulsions de rayonnement électromagnétique, consiste à calculer pour chaque impulsion du rayonnement qui est émise, l'intensité du rayonnement détecté pour chaque instant de détection. Pour cela, les contributions de parties du contenu de la zone d'exploration qui correspondent à une même valeur d'instant de détection du rayonnement rétrodiffusé, après aller et retour du rayonnement entre le système et chaque partie de contenu, sont additionnées. Ce mode de calcul utilise un «modèle feuilleté», suivant lequel la zone d'exploration est découpée en tranches d'espace successives, en fonction de la distance d'éloignement, et une valeur unique de vitesse radiale est associée à chaque tranche d'espace. Des intensités de rayonnement rétrodiffusé sont ainsi calculées pour plusieurs distributions possibles de vitesse radiale en fonction de la distance d'éloignement, puis celle de ces distributions qui correspond le mieux au rayonnement rétrodiffusé qui a été détecté réellement est acceptée comme résultat de mesure. Toutefois, une telle méthode de mesure présente les inconvénients suivants :
- des contributions au rayonnement rétrodiffusé qui correspondent à une même impulsion émise, mais à des portions de cette impulsion qui ont été émises à des instants différents et rétrodiffusées à des distances d'éloignement différentes dans la zone d'exploration, sont détectées à un même instant. Pour cette raison, la résolution spatiale que procure une telle méthode est de l'ordre de C·τ/2, où C est la vitesse de propagation du rayonnement à l'extérieur du système de détection et de télémétrie, et τ est la durée de chaque impulsion. Autrement dit, des résolutions spatiales plus fines que C·τ/2 ne sont pas possibles avec une méthode à modèle feuilleté ; et
- la valeur de vitesse radiale des cibles étant déduite de la fréquence du rayonnement rétrodiffusé qui est détecté, elle ne peut être estimée qu'à partir d'une analyse de ce rayonnement rétrodiffusé qui est limitée à l'intérieur d'une fenêtre de temps. Etant donné que cette fenêtre de temps est généralement sélectionnée pour avoir une durée qui est égale à celle de l'impulsion de rayonnement laser qui est émise, il en résulte que la résolution spatiale de l'ordre de C·τ ; et
- pour obtenir une résolution spatiale qui soit meilleure que C·τ, il est nécessaire de prendre en compte des contributions de toutes les tranches d'espace pour toutes les mesures relatives à des instants de détection différents, et non pas la contribution d'une seule tranche d'espace sur chaque mesure. L'art antérieur FR 2 965 064 décrit une mesure télémétrique réalisée en utilisant un dispositif de type LIDAR à détection hétérodyne.

### Problème technique

A partir de cette situation, un but de la présente invention est d'améliorer l'efficacité de mesures par détection et télémétrie avec des impulsions de rayonnement électromagnétique. Plus particulièrement, l'invention a pour but d'améliorer une résolution spatiale et une exactitude des résultats de mesure de vitesse radiale qui sont obtenus pour un milieu continu à caractériser, par exemple pour un écoulement fluide à caractériser, notamment dans une portion d'atmosphère.

Un autre but de l'invention consiste à prendre en compte le fonctionnement du système de détection et de télémétrie par impulsions de rayonnement électromagnétique qui est utilisé, afin de réduire la quantité des calculs qui sont nécessaires pour déduire, à partir d'un signal de mesure qui est collecté lors d'une séquence d'acquisition, un résultat de mesure qui caractérise les cibles contenues dans la zone d'exploration.

### Résumé de l'invention

Pour atteindre l'un au moins de ces buts ou un autre, un premier aspect de l'invention propose un nouveau procédé de détection et télémétrie par impulsions de rayonnement électromagnétique, pour caractériser une distribution de vitesse radiale en fonction d'une distance d'éloignement à l'intérieur d'une zone d'exploration. Ce procédé de l'invention comprend les étapes suivantes :
/1/ obtenir un système de détection et télémétrie par impulsions de rayonnement électromagnétique, adapté pour, lors d'une séquence d'acquisition, émettre au moins une impulsion d'un rayonnement électromagnétique, détecter une partie de l'au moins une impulsion de rayonnement qui a été rétrodiffusée par au moins une cible présente dans la zone d'exploration, et produire un signal de mesure qui correspond à cette partie d'impulsion de rayonnement rétrodiffusée et détectée, ce signal de mesure contenant des informations sur la distance d'éloignement et la vitesse radiale de chaque cible, l'information sur la vitesse radiale de chaque cible correspondant à un décalage de fréquence dû à l'effet Doppler qui se produit lorsque le rayonnement est rétrodiffusé par cette cible ; et
/2/ effectuer une séquence d'acquisition en contrôlant le système pour émettre l'au moins une impulsion dans la zone d'exploration.
Le procédé de l'invention comprend en outre les étapes supplémentaires suivantes :
/3/ obtenir une caractérisation d'une réponse impulsionnelle du système, notamment par simulation ou par mesure, cette réponse impulsionnelle correspondant au signal de mesure qui est produit par le système lors d'une séquence d'acquisition et lorsqu'un élément rétrodiffusant unique se trouve dans la zone d'exploration, cet élément rétrodiffusant unique correspondant à une valeur unique de distance d'éloignement et ayant une valeur connue de vitesse radiale, possiblement nulle, par rapport au système, et lorsque la zone d'exploration est dépourvue d'élément rétrodiffusant autre que le ainsi-nommé élément rétrodiffusant unique ; et
/4/ en considérant que le signal de mesure qui a été produit à l'étape /2/ est une somme de contributions qui correspondent chacune à la réponse impulsionnelle appliquée à une valeur pour la distance d'éloignement et à une valeur pour la vitesse radiale, et multipliée par une valeur d'amplitude de rétrodiffusion, obtenir par décomposition du signal de mesure en plusieurs contributions, un résultat de mesure sous forme de couples qui sont constitués chacun par une valeur d'amplitude de rétrodiffusion et une valeur de vitesse radiale, et qui sont attribués respectivement à plusieurs valeurs de la distance d'éloignement à l'intérieur de la zone d'exploration.

Autrement dit, le résultat du procédé de l'invention est constitué par une distribution d'amplitude de rétrodiffusion, et par une distribution de vitesse radiale, les deux distributions étant des fonctions de la distance d'éloignement par rapport au système utilisé, à l'intérieur de la zone d'exploration. La distribution d'amplitude de rétrodiffusion caractérise la concentration ou le type des cibles qui sont présentes à des endroits variables dans la zone d'exploration, et la distribution de vitesse radiale caractérise un déplacement de ces cibles aux mêmes endroits, ce déplacement pouvant varier entre des endroits différents à l'intérieur de la zone d'exploration. Lorsque le milieu à caractériser est un fluide en écoulement, la distribution de vitesse radiale constitue une caractérisation du champ de vitesse radiale de l'écoulement.

Par opposition à la méthode connue de l'art antérieur, qui procède par addition des contributions de tranches spatiales de la zone d'exploration au rayonnement qui est rétrodiffusé puis détecté à un instant déterminé, le procédé de l'invention est fondé sur une addition de contributions des tranches spatiales de la zone d'exploration au signal de mesure qui est collecté lors d'une séquence d'acquisition par le système utilisé. De cette façon, le procédé de l'invention prend en compte simultanément les contributions des tranches spatiales de décomposition de la zone d'exploration, et les effets du fonctionnement du système utilisé. Notamment, il prend en compte la forme des impulsions de rayonnement électromagnétique qui sont émises à chaque séquence d'acquisition, ainsi que le mode de détection et le traitement de signal qui sont appliqués au sein d'une voie de détection du système. Autrement dit, les caractéristiques de l'émission de rayonnement par le système utilisé, les effets de propagation du rayonnement entre le système et la zone d'exploration, et dans la zone d'exploration, pour les deux sens d'aller et de retour du rayonnement, le pouvoir de rétrodiffusion qui est effectif localement dans la zone d'exploration, et les caractéristiques de détection et de traitement du signal dans la voie de détection du système utilisé, sont tous pris en compte simultanément dans le procédé de l'invention. Pour cette raison, le procédé de l'invention est particulièrement efficace pour réduire la quantité des calculs qui sont mis en oeuvre. Cette efficacité est procurée par l'utilisation de la réponse impulsionnelle, qui contient les caractéristiques de l'émission de rayonnement qui est produite par le système utilisé, et les caractéristiques de détection et de traitement du signal de ce système. Le signal de mesure est alors interprété, selon l'invention, comme un résultat d'une convolution de cette réponse impulsionnelle avec une distribution d'amplitude de rétrodiffusion en fonction de la distance d'éloignement et de valeurs de vitesse radiale, qui correspond au contenu de la zone d'exploration. L'étape /4/ consiste à réaliser par des calculs une opération qui est l'inverse de cette convolution, et parfois appelée déconvolution.

Dans différents modes de mise en oeuvre de l'invention, la réponse impulsionnelle peut être une fonction d'une part de la distance d'éloignement, ou d'une durée d'aller-retour du rayonnement à partir d'une sortie optique du système, et d'autre part de l'un parmi :
- une fréquence de composante spectrale de la partie d'impulsion de rayonnement qui a été rétrodiffusée puis détectée par le système ;
- un écart de fréquence entre une composante spectrale de la partie d'impulsion de rayonnement qui a été rétrodiffusée puis détectée par le système, et le rayonnement de chaque impulsion tel qu'émise par le système, ou une valeur de vitesse radiale qui est associée à cet écart de fréquence par effet Doppler ; et
- une fréquence d'un spectre du signal de mesure qui est utilisé à l'étape /3/.

Possiblement, la caractérisation de la réponse impulsionnelle peut être obtenue à l'étape /3/ en effectuant au moins une séquence d'acquisition avec le système de détection et télémétrie par impulsions de rayonnement électromagnétique, et avec un élément rétroréfléchissant unique qui est positionné à une distance d'éloignement déterminée dans la zone d'exploration. Dans ce cas, l'étape /3/ constitue un étalonnage expérimental du système utilisé. Alternativement, la caractérisation de la réponse impulsionnelle peut être obtenue en effectuant une simulation numérique d'un fonctionnement du système de détection et télémétrie par impulsions de rayonnement électromagnétique lorsqu'un élément rétroréfléchissant unique est présent à une distance d'éloignement déterminée dans la zone d'exploration. Dans les deux cas, la caractérisation de la réponse impulsionnelle qui est obtenue peut être imparfaite. Notamment, dans le premier cas, où une séquence d'acquisition est utilisée pour l'étalonnage du système, la caractérisation de la réponse impulsionnelle qui est obtenue peut être affectée par du bruit de détection, par des effets d'un échantillonnage et d'une numérisation de valeurs qui peuvent être mis en oeuvre, etc. Dans le second cas, où la réponse impulsionnelle du système est caractérisée par simulation numérique, des phénomènes physiques secondaires peuvent ne pas être pris en compte.

De façon générale, le procédé de l'invention est compatible avec un système de détection et télémétrie par impulsions de rayonnement électromagnétique de type monostatique ou de type bistatique. Dans le cadre de la présente invention, on entend par monostatique un tel système pour lequel des ports optiques de sortie et de détection de ce système sont confondus, contigus ou proches l'un de l'autre par rapport à la distance d'éloignement qui existe entre le système et la zone d'exploration. A l'inverse, on entend par bistatique un système pour lequel les ports optiques de sortie et de détection sont écartés spatialement.

De façon générale aussi, le système de détection et télémétrie par impulsions de rayonnement électromagnétique qui est utilisé pour mettre en oeuvre l'invention peut être adapté pour réaliser des mesures selon des modes de détection quelconques. Notamment, un mode de détection peut être utilisé, où le décalage fréquentiel du rayonnement rétrodiffusé, qui est dû à l'effet Doppler survenant lors de la réflexion ou rétrodiffusion des impulsions émises sur une (des) cible(s) mobile(s), est mesuré en faisant interférer le rayonnement rétrodiffusé qui est détecté avec lui-même. Un tel mode de détection est appelé «détection directe». Toutefois, le système peut être adapté de préférence pour mettre en oeuvre un mode de détection hétérodyne, où le rayonnement rétrodiffusé qui est détecté est mélangé avec une onde de référence, et un battement qui résulte de ce mélange est analysé. Dans ce cas, le signal de mesure qui est produit à chaque séquence d'acquisition, et qui est utilisé à l'étape /4/, est un signal de mesure hétérodyne.

De façon générale encore, le système de détection et télémétrie par impulsions de rayonnement électromagnétique qui est utilisé pour mettre en oeuvre l'invention, peut être de type LIDAR. Dans ce cas, le rayonnement des impulsions qui sont émises par ce système est un rayonnement laser, et chaque impulsion de rayonnement peut posséder l'une au moins des caractéristiques suivantes :
- une longueur d'onde du rayonnement à l'intérieur de l'impulsion peut être comprise entre 250 nm et 10 µm ;
- une durée de chaque impulsion peut être comprise entre 50 ns (nanoseconde) et 1 µs (microseconde) ; et
- l'impulsion peut posséder une largeur fréquentielle à mi-hauteur, qui est inférieure à 1 GHz, de préférence inférieure à 20 MHz.

Alternativement, le système de détection et télémétrie par impulsions de rayonnement électromagnétique qui est utilisé pour mettre en oeuvre l'invention, peut être de type RADAR. Dans un tel autre cas, le rayonnement des impulsions qui sont émises par ce système peut avoir une longueur d'onde dans le vide comprise entre 1 mm et 7,5 mm.

Dans des premiers modes préférés de mise en oeuvre de l'invention, le résultat de mesure peut être déduit du signal de mesure à l'étape /4/ en appliquant un algorithme de décomposition bidimensionnelle qui utilise une méthode de type maximum a posteriori, ou une méthode de maximum de vraisemblance, pouvant être régularisée, dans ce cas aussi dite pénalisée, ou non, ou encore une méthode stochastique telle qu'une méthode de Monte Carlo à Chaînes de Markov. Possiblement, le procédé peut alors comprendre une étape supplémentaire qui est exécutée à partir du résultat de mesure fourni par l'algorithme de décomposition bidimensionnelle, pour réduire des largeurs de distributions de vitesse radiale qui sont attribuées séparément à plusieurs valeurs de la distance d'éloignement dans la zone d'exploration.

Dans des seconds modes préférés de mise en oeuvre de l'invention, l'étape /4/ comprend d'attribuer une valeur unique de vitesse radiale et une valeur unique d'amplitude de rétrodiffusion à chaque valeur de la distance d'éloignement, pour un échantillonnage de valeurs de la distance d'éloignement à l'intérieur de la zone d'exploration. Une reconstruction du signal de mesure est alors calculée comme une somme de contributions chacune égale à la réponse impulsionnelle appliquée à une valeur de distance d'éloignement et à la valeur de vitesse radiale qui a été attribuée à cette valeur de distance d'éloignement, et multipliée par la valeur d'amplitude de rétrodiffusion qui a été aussi attribuée à la même valeur de distance d'éloignement, pour toutes les valeurs de la distance d'éloignement dans l'échantillonnage. Des ajustements itératifs des valeurs attribuées de vitesse radiale et d'amplitude de rétrodiffusion sont ensuite réalisés, de façon à réduire un écart entre le signal de mesure qui a été produit à l'étape /2/ et la reconstruction du signal de mesure qui résulte des valeurs attribuées de vitesse radiale et d'amplitude de rétrodiffusion. Le résultat de mesure est alors formé par les valeurs de vitesse radiale et d'amplitude de rétrodiffusion attribuées aux valeurs de distance d'éloignement, qui procurent l'écart minimal entre le signal de mesure et la reconstruction du signal de mesure.

Enfin, un procédé qui est conforme au premier aspect de l'invention peut être utilisé avantageusement pour l'une au moins des applications suivantes :
- des mesures météorologiques, par exemple des mesures de turbulences atmosphériques ;
- des mesures de diffusion de polluants atmosphériques ;
- des mesures de concentrations locales pour des particules rétrodiffusantes en suspension dans un milieu, ou pour des composés chimiques qui absorbent et réémettent le rayonnement des impulsions ;
- des mesures de cisaillement d'un écoulement atmosphérique, par exemple au niveau d'un aéroport ;
- des mesures de position et/ou de durée de vie d'au moins un vortex qui est présent dans un écoulement de fluide ;
- des mesures anémométriques qui sont effectuées à partir d'un aéronef en vol, notamment à partir d'un dirigeable ou d'un drone ;
- des mesures anémométriques qui sont effectuées pour optimiser un fonctionnement d'éolienne ; et
- des mesures anémométriques qui sont effectuées pour ajuster un vol d'aéronef en formation, ou pour ajuster un vol de drone.

Par ailleurs, un second aspect de l'invention propose un système de détection et télémétrie par impulsions de rayonnement électromagnétique, qui comprend :
- une voie d'émission, adaptée pour émettre au moins une impulsion de rayonnement électromagnétique dans une zone d'exploration lorsqu'une séquence d'acquisition est effectuée ;
- une voie de détection, adaptée pour détecter, pendant la séquence d'acquisition, une partie de l'au moins une impulsion de rayonnement qui a été émise, après que cette partie d'impulsion de rayonnement a été rétrodiffusée par au moins une cible présente dans la zone d'exploration, cette voie de détection étant adaptée en outre pour produire un signal de mesure qui contient des informations sur une distance d'éloignement et une vitesse radiale de chaque cible présente dans la zone d'exploration, l'information sur la vitesse radiale de chaque cible correspondant à un décalage de fréquence dû à l'effet Doppler qui se produit lorsque le rayonnement est rétrodiffusé par cette cible ;
- un contrôleur, qui est agencé pour activer les voies d'émission et de détection conformément à la séquence d'acquisition ;
- des moyens de stockage d'une caractérisation d'une réponse impulsionnelle du système, cette réponse impulsionnelle correspondant au signal de mesure qui est produit par le système lors d'une séquence d'acquisition, lorsqu'un élément rétrodiffusant unique se trouve dans la zone d'exploration, cet élément rétrodiffusant unique correspondant à une valeur unique de la distance d'éloignement et ayant une valeur de vitesse radiale, possiblement nulle, par rapport au système, et lorsque la zone d'exploration est dépourvue d'élément rétrodiffusant autre que le ainsi-nommé élément rétrodiffusant unique ; et
- des moyens de calcul, adaptés pour décomposer le signal de mesure comme une somme de contributions qui correspondent chacune à la réponse impulsionnelle appliquée à une valeur pour la distance d'éloignement et à une valeur pour la vitesse radiale, et multipliée par une valeur d'amplitude de rétrodiffusion, de façon à délivrer un résultat de mesure sous forme de couples qui sont constitués chacun par une valeur d'amplitude de rétrodiffusion et une valeur de vitesse radiale, et qui sont attribués respectivement à plusieurs valeurs de la distance d'éloignement à l'intérieur de la zone d'exploration.

Un tel système est adapté notamment pour mettre en oeuvre un procédé qui est conforme au premier aspect de l'invention.

### Brève description des figures

Les caractéristiques et avantages de la présente invention apparaîtront plus clairement dans la description détaillée ci-après d'exemples de mise en oeuvre non-limitatifs, en référence aux figures annexées parmi lesquelles :
[Fig. 1] est un schéma synoptique d'un système de détection et télémétrie par impulsions de rayonnement électromagnétique, auquel l'invention peut être appliquée ;
[Fig. 2] est un diagramme temporel d'une impulsion de rayonnement pouvant être émise par le système de [Fig. 1], pour mettre en oeuvre l'invention ;
[Fig. 3] est un diagramme tridimensionnel qui illustre une réponse impulsionnelle d'un système conforme à [Fig. 1], pour des impulsions de rayonnement émises qui sont conformes à [Fig. 2] ; et
[Fig. 4a] à [Fig. 4c] sont trois diagrammes tridimensionnels qui illustrent une application de l'invention à la caractérisation d'un écoulement turbulent de type Von Karman.

### Description détaillée de l'invention

Pour raison de clarté de la description ci-dessous, des composants qui ne sont pas concernés directement par l'invention, ou qui peuvent être adaptés de façon spontanée par l'Homme du métier pour mettre en oeuvre l'invention, ne sont pas représentés ni décrits.

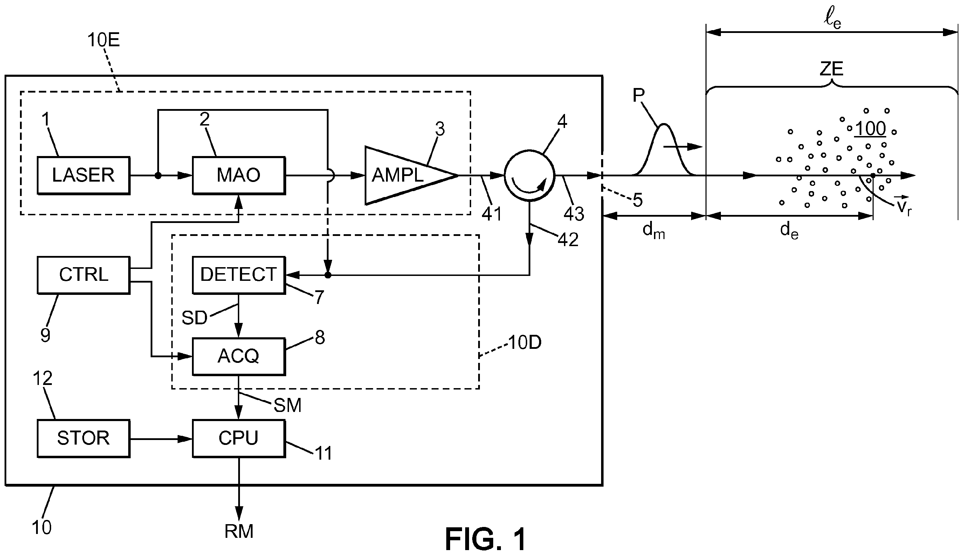

L'invention est maintenant décrite, à titre d'exemple, pour un système LIDAR impulsionnel à détection hétérodyne. Toutefois, l'invention peut être transposée facilement, à partir de la description qui suit, à des modes de détection autres que la détection hétérodyne, et/ou à un système RADAR. De façon générale, l'invention concerne la conversion d'un signal de mesure en un résultat de mesure qui comprend une distribution de vitesse radiale en fonction d'une distance d'éloignement. De façon équivalente, chaque valeur de vitesse radiale peut être remplacée dans cette caractérisation par une valeur de décalage fréquentiel qui est produite par effet Doppler, par une cible qui possède la valeur de vitesse radiale. La formule connue de l'Homme du métier qui exprime cette équivalence est Δf ₌ -2-vᵣ/λ, où Δf est le décalage fréquentiel, vᵣ est la vitesse radiale de la cible, et λ est la longueur d'onde du rayonnement. De même, chaque valeur de distance d'éloignement peut être remplacée par une durée entre un instant d'émission du rayonnement et un instant ultérieur de détection auquel une partie rétrodiffusée de ce rayonnement a été détectée, selon la formule dₑ=C·(t_{d}-t₀)/2, où t_{d} est l'instant de détection, et to est l'instant d'émission, et dₑ la distance d'éloignement. En outre, à titre d'exemple, le système LIDAR qui est décrit ci-dessous est adapté pour réaliser des mesures anémométriques, en utilisant une rétrodiffusion de rayonnement laser qui est produite par des particules présentes en suspension dans l'air. Ces particules rétrodiffusantes, qui constituent des cibles à caractériser et qui peuvent être des gouttelettes d'aérosols, des poussières ou des grains de glace, sont désignées par la référence 100 dans [Fig. 1].

Conformément à [Fig. 1], le système LIDAR 10 comprend une voie d'émission 10E et une voie de détection 10D. La voie d'émission 10E comprend une source laser 1, qui produit un rayonnement monochromatique pouvant avoir une longueur d'onde égale à 1545 nm (nanomètre) lorsque ce rayonnement se propage dans l'air, au moins un modulateur acousto-optique 2, noté MAO et contrôlé pour former des impulsions successives à partir du rayonnement laser qui est produit par la source 1, et un amplificateur optique 3, noté AMPL. Le modulateur acousto-optique 2 produit en outre un décalage en fréquence du rayonnement laser qui est émis par le système LIDAR 10 vers une cible par rapport au rayonnement laser tel que produit par la source 1. De cette façon, un signal de détection hétérodyne qui est produit dans la voie de détection 10D possède une fréquence de battement non-nulle lorsque le rayonnement est rétroréfléchi par une cible qui est immobile. La voie de détection 10D comprend un détecteur 7, noté DETECT, et une carte d'acquisition 8, notée ACQ. La carte d'acquisition 8 est connectée pour recevoir un signal électrique analogique de détection hétérodyne qui est produit par le détecteur 7, et qui est noté SD. Elle est conçue pour appliquer un traitement à ce signal de détection SD, et délivrer un signal de mesure qui résulte de ce traitement, et qui est noté SM. En particulier, la carte d'acquisition 8 peut exécuter des fonctions d'échantillonnage et numérisation du signal de détection SD, d'accumulation du signal numérisé pour plusieurs impulsions de rayonnement identiques qui sont émises successivement, de filtrage, etc. Possiblement, un amplificateur de signal électrique, non représenté, peut être utilisé sur la liaison de transmission du signal de détection SD entre le détecteur 7 et la carte d'acquisition 8. Conformément au mode de détection hétérodyne, le détecteur 7 reçoit en entrée un mélange de la partie de chaque impulsion qui a été reçue par la voie de détection 10D, avec une partie du rayonnement laser d'émission qui est prélevée entre la source 1 et le modulateur acousto-optique 2. De façon connue, la partie du rayonnement laser d'émission qui est transmise au détecteur 7 à partir de la voie d'émission 10E peut subir diverses transformations intermédiaires, entre son prélèvement dans la voie d'émission 10E et le détecteur 7. Le modulateur acousto-optique 2 et la carte d'acquisition 8 sont commandés par un contrôleur 9, qui est noté CTRL et procure au système son fonctionnement LIDAR à chaque séquence d'acquisition.

Lorsque le système LIDAR 10 est du type monostatique, les voies d'émission 10E et de détection 10D peuvent être couplées par un circulateur optique 4 à un port optique 5, ce dernier faisant office à la fois de port optique de sortie pour la voie d'émission 10E et de port optique de réception pour la voie de détection 10D. Pour cela, la voie d'émission 10E est couplée optiquement à un port optique d'entrée 41 du circulateur optique 4, la voie de détection 10D est couplée optiquement à un port optique de sortie 42 du circulateur optique 4, et le port optique 5 du système LIDAR 10 est couplé optiquement à un port optique mixte d'entrée-sortie 43 du circulateur optique 4.

Un tel système LIDAR 10 est connu de l'Homme du métier. Il permet d'analyser un contenu d'une zone d'exploration ZE qui est située sur le trajet des impulsions laser en avant du port optique 5, à l'extérieur du système 10. De façon connue, cette zone d'exploration ZE est un volume de recouvrement entre une trace de propagation des impulsions laser au-delà du port optique 5, et un milieu à caractériser qui se trouve à l'extérieur du système 10. Une distance dₘ qui sépare une limite proximale de la zone d'exploration ZE du port optique 5 peut être définie par une fenêtre temporelle de détection qui est appliquée par la voie de détection 10D, notamment par la carte d'acquisition 8. Une longueur lₑ de la zone d'exploration ZE est aussi déterminée par la fenêtre temporelle de détection. Alternativement, la zone d'exploration ZE peut être déterminée par une convergence qui est appliquée aux impulsions laser, par exemple en utilisant une lentille convergente pour former le port optique 5. Par ailleurs, chaque impulsion laser possède une durée d'impulsion, qui est notée τ dans la suite. Dans ces conditions, le signal de mesure SM contient une caractérisation des cibles 100 qui sont contenues dans la zone d'exploration ZE, en termes de distance d'éloignement de chaque cible par rapport au port optique 5, notée dₑ, et de vitesse radiale de chaque cible, notée vᵣ. Dans la suite, la distance d'éloignement dₑ est comptée à partir de la limite proximale de la zone d'exploration ZE. En outre, on entend par vitesse radiale vᵣ d'une des cibles 100 sa composante de vitesse qui est parallèle à la direction de propagation des impulsions laser. Elle est comptée positivement pour un déplacement d'éloignement de la cible par rapport au système 10, et négativement pour un rapprochement de la cible vers le système 10. Lorsque le contenu de la zone d'exploration ZE est une portion d'atmosphère, les cibles 100 sont constituées par les gouttelettes d'aérosols, poussières et/ou grains de glace qui sont en suspension dans l'air, et qui sont entraînés en mouvement par les courants aériens tels qu'ils existent dans la zone d'exploration ZE. Une mesure qui est effectuée en utilisant le système LIDAR 10 permet alors de caractériser la distribution de vitesse radiale vᵣ de ces courants aériens en fonction de la distance d'éloignement dₑ, à l'intérieur de la zone d'exploration ZE. Une telle application du système LIDAR 10, pour des mesures anémométriques, est aussi connue de l'Homme du métier. Une impulsion de rayonnement, qui est désignée par la référence P, est représentée symboliquement dans [Fig. 1], en train de se propager entre le port optique 5 du système 10 et la zone d'exploration ZE.

L'invention objet de la présente description concerne la transformation du signal de mesure SM qui est délivré par la carte d'acquisition 8, en un résultat de mesure RM qui est relatif à la distribution de vitesse radiale vᵣ dans la zone d'exploration ZE. Cette transformation peut être effectuée par une unité de calcul 11, notée CPU. De façon générale, le résultat de mesure RM est constitué par une distribution d'amplitude de rétrodiffusion, qui est une fonction à la fois de la distance d'éloignement dₑ et de la vitesse radiale vᵣ, ou de façon équivalente une fonction de la distance d'éloignement dₑ et du décalage fréquentiel d'effet Doppler Δf. Cette distribution d'amplitude de rétrodiffusion du résultat de mesure RM est notée S(dₑ,vᵣ), ou S(dₑ,Δf). Elle constitue une estimation d'une distribution réelle d'amplitude de rétrodiffusion S₀(dₑ,vᵣ), ou S₀(dₑ,Δf), qui est produite par les cibles 100 dans la zone d'exploration ZE. La référence 12 désigne des moyens de mémorisation, notés STOR, qui sont accessibles à l'unité de calcul 11. La structure des moyens de mémorisation 12 peut être sélectionnée avantageusement pour faciliter des calculs de convolution qui utilisent des valeurs stockées dans ces moyens 12.

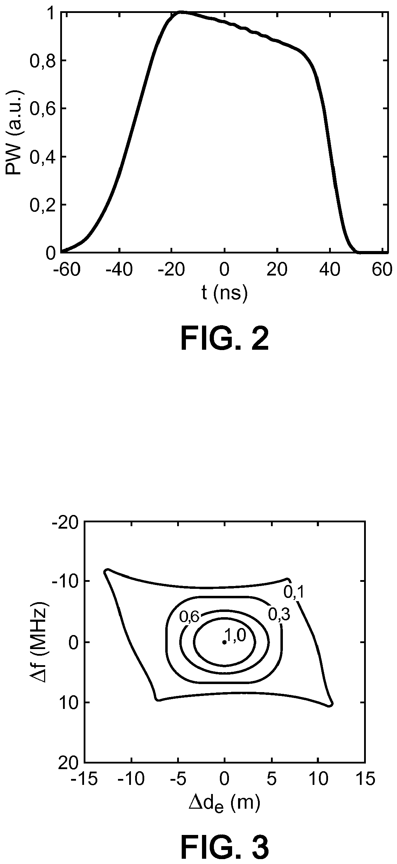

[Fig. 2] montre un exemple d'enveloppe d'impulsion de rayonnement, correspondant à la forme de chaque impulsion P telle que produite par la voie d'émission 10E du système 10 et effective en aval du port optique 5. L'axe des abscisses repère le temps noté t, et exprimé en nanosecondes (ns), et l'axe des ordonnées repère la puissance instantanée du rayonnement, notée PW et normalisée par rapport à sa valeur maximale. La largeur à mi-hauteur de l'impulsion représentée est d'environ 75 ns, correspondant à une longueur spatiale d'environ 22 m lorsque l'impulsion se propage dans l'air à l'extérieur du système 10.

[Fig. 3] montre un exemple de réponse impulsionnelle qui correspond au système LIDAR de [Fig. 1], pour la forme d'impulsion de [Fig. 2]. Cette réponse impulsionnelle est obtenue lorsqu'une cible rétroréfléchissante telle qu'un miroir est disposée dans la zone d'exploration ZE. Par définition, la réponse impulsionnelle correspond aux conditions suivantes :
- la cible rétroréfléchissante, par exemple le miroir, est située à un seul endroit dans la zone d'exploration ZE, correspondant à une valeur unique pour la distance d'éloignement dₑ ;
- la cible rétroréfléchissante correspond à une valeur unique pour sa vitesse radiale vᵣ. De préférence, mais d'une façon qui n'est pas indispensable, cette valeur de vitesse radiale de la cible rétroréfléchissante peut être nulle ;
- cette cible rétroréfléchissante est la seule à l'intérieur de la zone d'exploration ZE ; et
- la forme d'impulsion, et de préférence aussi d'autres paramètres de fonctionnement du système 10, voire tous ses paramètres de fonctionnement, sont identiques entre leur détermination pour obtenir la réponse impulsionnelle et ces forme d'impulsion et paramètres de fonctionnement tels qu'utilisés pour une séquence d'acquisition utile, dans le cas présent pour réaliser une mesure anémométrique.

La réponse impulsionnelle peut être obtenue à partir du signal de mesure SM, en restreignant ce signal l'intérieur de fenêtres temporelles qui sont progressivement décalées dans le temps, et en appliquant une fonction d'apodisation, par exemple de forme gaussienne, à chaque restriction du signal de mesure SM dans la fenêtre temporelle correspondante. De façon connue, une fonction d'apodisation a pour but de supprimer ou d'atténuer des discontinuités qui sont présentes dans le signal analysé, pour supprimer ou réduire des artéfacts qui seraient causés par ces discontinuités. Dans le cas présent, les extrémités des fenêtres temporelles provoqueraient des lobes secondaires dans des résultats ultérieurs de transformation de Fourier. La fonction d'apodisation supprime de tels lobes. Chaque portion du signal de mesure SM restreinte à une fenêtre temporelle, et apodisée, est alors traitée par transformation de Fourier par rapport au temps, puis le résultat de cette transformation de Fourier est élevé au carré pour fournir une section à valeur constante de la distance d'éloignement dₑ, de la représentation de la réponse impulsionnelle de [Fig. 3]. L'origine de l'axe horizontal qui repère les valeurs de la distance d'éloignement dₑ peut être affectée à celle de ces valeurs qui correspond au maximum de la réponse impulsionnelle. Ainsi, l'axe horizontal repère des valeurs d'écart Δdₑ, définies par rapport à cette origine pour la réponse impulsionnelle. Dans la suite, les sections de la représentation de la réponse impulsionnelle qui correspondent chacune à une valeur constante de Δdₑ, sont appelées spectres de la réponse impulsionnelle, l'ensemble de ces spectres formant un spectrogramme de cette réponse impulsionnelle. Chaque spectre est donc une fonction de l'écart fréquentiel Δf, et est affecté à une valeur de la distance d'éloignement dₑ, et donc à une valeur de l'écart Δdₑ, conformément au temps de vol entre un instant d'émission de l'impulsion et un instant médian de la fenêtre temporelle qui a été appliquée au signal de mesure SM pour ce spectre.

La réponse impulsionnelle du système 10 peut être obtenue expérimentalement, par exemple en disposant réellement un miroir rétroréfléchissant à un endroit identifié dans la zone d'exploration ZE, et en conférant à ce miroir rétroréfléchissant une vitesse radiale de déplacement qui est aussi identifiée. De préférence, le miroir rétroréfléchissant peut être immobile par rapport au système 10 pour une telle détermination expérimentale de la réponse impulsionnelle. Une séquence d'acquisition est alors exécutée par le système 10, lors de laquelle l'unité de calcul 11 applique les opérations de découpage et de transformation qui viennent d'être décrites au signal de mesure SM tel que délivré par la carte d'acquisition 8.

Alternativement, la réponse impulsionnelle peut être obtenue par une simulation numérique du fonctionnement du système 10 lors d'une séquence d'acquisition, en simulant l'effet du miroir rétroréfléchissant qui est disposé dans la zone d'exploration ZE, sur les impulsions de rayonnement émises.

De façon générale, l'obtention de la réponse impulsionnelle constitue un étalonnage du système 10, pour utiliser ultérieurement ce système 10 afin de réaliser des mesures utiles. La réponse impulsionnelle qui a été déterminée pour le système 10 est stockée dans les moyens de mémorisation 12.

Dans le diagramme de [Fig. 3], l'axe horizontal peut donc repérer l'écart Δdₑ de distance d'éloignement par rapport à la position de la cible rétroréfléchissante qui a été utilisée pour l'étalonnage. Il est exprimé en mètres. L'axe vertical repère le décalage fréquentiel Δf, exprimé en Mégahertz, par rapport à une fréquence du rayonnement dans la voie d'émission 10E. Enfin, le troisième axe du diagramme de [Fig. 3] repère une amplitude de la réponse impulsionnelle, qui peut être exprimée en une unité arbitraire (a.u.). Il correspond aux lignes de niveau des valeurs indiquées 0,1, 0,3, 0,6 et 1,0. La réponse impulsionnelle montre que la cible rétroréfléchissante unique, à cause de la forme de chaque impulsion et du traitement de signal qui est appliqué dans la voie de détection 10D, apparaît dans le signal de mesure SM comme un ensemble étalé de cibles rétroréfléchissantes, qui sont en déplacement conformément à une distribution de vitesse radiale répartie autour de la valeur réelle de vitesse radiale de la cible unique. Ces étalements de la réponse impulsionnelle en termes de distance d'éloignement et de vitesse radiale sont dus notamment à la largeur finie de l'impulsion de [Fig. 2], et à la fenêtre temporelle de détection qui est appliquée par la carte d'acquisition 8. En outre, la distribution de vitesse radiale dépend de l'écart Δdₑ par rapport à la distance d'éloignement réelle de la cible unique qui a été utilisée pour l'étalonnage du système 10, de sorte que la réponse impulsionnelle est une fonction des deux variables Δdₑ et vᵣ, ou de façon équivalente Δdₑ et Δf. Dans la suite, h(Δdₑ,Δf) désigne cette réponse impulsionnelle. En outre, pour l'exemple qui est reproduit dans [Fig. 3], l'étirement oblique qui affecte la réponse impulsionnelle dans le système des axes Δdₑ et Δf révèle une dérive d'environ 3 MHz dans la fréquence de chaque impulsion émise, entre le début et la fin de cette impulsion. Une telle dérive de la fréquence d'émission sera ainsi automatiquement prise en compte dans le traitement d'obtention du résultat de mesure RM pour une séquence d'acquisition utile, de sorte que cette dérive n'introduise pas d'erreur dans ce résultat.

Lorsqu'une séquence d'acquisition, dite utile, est effectuée avec le système 10 sur une portion d'atmosphère contenue dans la zone d'exploration ZE, le signal de mesure SM qui est alors délivré par la carte d'acquisition 8 est considéré comme une somme incohérente de parties d'impulsion laser qui sont rétrodiffusées par des cibles réparties dans la zone d'exploration ZE, à des valeurs variables pour la distance d'éloignement dₑ. Ces cibles sont associées à des valeurs d'amplitude de rétrodiffusion et de vitesse radiale pour chacune des valeurs de la distance d'éloignement, comprise entre 0 et lₑ. L'unité de calcul 11 applique alors au signal de mesure SM tel que délivré par la carte d'acquisition 8, sensiblement le même traitement que celui qui a été décrit plus haut pour obtenir expérimentalement la réponse impulsionnelle. Ce traitement comprend les étapes suivantes :
- restriction du signal de mesure SM à des fenêtres temporelles qui sont progressivement décalées dans le temps ;
- application d'une fonction d'apodisation à la portion du signal de mesure SM qui est contenue dans chaque fenêtre temporelle ;
- application d'une transformation de Fourier par rapport au temps à la portion apodisée du signal de mesure SM qui est contenue dans chaque fenêtre temporelle ; et
- pour chaque fenêtre temporelle, et pour chaque valeur de fréquence f, calcul du carré du résultat de la transformation de Fourier, de façon à obtenir un spectre pour cette fenêtre temporelle.

L'ensemble des spectres forme alors un spectrogramme de séquence d'acquisition utile qui caractérise le contenu de la zone d'exploration ZE. Au sein de ce spectrogramme de séquence d'acquisition utile, chaque spectre est affecté à la valeur de la distance d'éloignement dₑ qui correspond au temps de vol entre l'instant d'émission de l'impulsion et l'instant médian de la fenêtre temporelle qui a été appliquée au signal de mesure SM pour ce spectre. Le spectrogramme est noté Sp(dₑ,Δf) en prenant une fréquence de référence pour définir le décalage fréquentiel Δf entre chaque composante de spectre et cette fréquence de référence. Dans le cas d'une détection hétérodyne, cette fréquence de référence est la fréquence du rayonnement monochromatique qui est produit par la source laser 1. Alors, sans tenir compte d'un éventuel bruit de mesure, le spectrogramme Sp(dₑ,Δf) peut être modélisé par [S₀*h](dₑ,Δf), où S₀(dₑ,Δf) est encore la distribution d'amplitude de rétrodiffusion du contenu de la zone d'exploration ZE lors de la séquence d'acquisition utile, et * désigne l'opération de convolution bidimensionnelle.

L'unité de calcul 11 détermine alors une estimation de la distribution d'amplitude de rétrodiffusion S₀(dₑ,Δf) à partir du spectrogramme Sp(dₑ,Δf). Cette estimation de la distribution d'amplitude de rétrodiffusion S₀(dₑ,Δf) peut constituer le résultat de mesure RM, et est notée S(dₑ,Δf). Pour cela, plusieurs algorithmes peuvent être utilisés alternativement, dont les deux suivants qui sont cités à titre d'exemples non-limitatifs.

Un algorithme de décomposition bidimensionnelle. Un tel algorithme est appliqué au spectrogramme Sp(dₑ,Δf) en utilisant la réponse impulsionnelle h(Δdₑ,Δf). Il est couramment appelé algorithme de déconvolution bidimensionnelle, et peut utiliser une méthode de maximum de vraisemblance, qui consiste en une minimisation d'un critère d'attache aux données, aussi appelé fonction de coût, tel que par exemple un critère de moindres carrés qui mesure l'écart entre le spectrogramme Sp(dₑ,Δf) et la modélisation de ce spectrogramme sous la forme [S*h](dₑ,Δf). Une deuxième méthode possible, appelée méthode de maximum a posteriori, consiste à ajouter au critère d'attache aux données, un critère de régularisation, aussi appelé critère de pénalisation, qui contient des informations de connaissance a priori de certaines caractéristiques du contenu de la zone d'exploration ZE. Une telle information peut être, par exemple, que chaque spectre présente une largeur spectrale très faible. Un exemple d'ouvrage de référence sur une telle méthode de maximum a posteriori est «Bayesian Approach to Inverse Problems », édité par J. Idier, ISTE / John Wiley, London, 2008, pp. 243-283. Une troisième méthode encore possible peut être une méthode stochastique, aussi appelée méthode de Monte Calo, suivant laquelle la solution est recherchée par exploration d'un ensemble d'états qui sont possibles pour le contenu de la zone d'exploration ZE, en fonction d'au moins une caractéristique aléatoire. Une telle méthode de Monte Carlo est dite en outre à Chaînes de Markov lorsque chaque nouveau tirage de la caractéristique aléatoire dépend uniquement du résultat du tirage en cours, sans dépendre des résultats des tirages antérieurs. Un exemple d'ouvrage de référence sur ces méthodes stochastiques est «Monte Carlo Statistical Methods», de Christian Robert et George Casella, Springer-Verlag, coll. Springer Texts in Statistics, 2010. De façon générale, les méthodes de décomposition bidimensionnelle sont connues de l'Homme du métier, si bien qu'il n'est pas nécessaire de les décrire plus ici. Le résultat de la décomposition bidimensionnelle est l'estimation S(dₑ,Δf) de la distribution d'amplitude de rétrodiffusion, qui dépend des deux variables de distance d'éloignement et de décalage fréquentiel. Cette estimation S(dₑ,Δf), telle qu'elle résulte de l'application de l'algorithme de décomposition bidimensionnelle, peut être améliorée par une étape complémentaire qui consiste à réduire la largeur de la distribution de vitesse radiale vᵣ, ou du décalage fréquentiel Δf qui est associé à vᵣ par effet Doppler, pour chaque valeur de la distance d'éloignement dₑ. Une réduction maximale peut notamment être obtenue en ne gardant pour chaque valeur de la distance d'éloignement dₑ, que la valeur du décalage fréquentiel Δf - ou bien la valeur de la vitesse radiale vᵣ - qui correspond au maximum de la distribution d'estimation S(dₑ,Δf) telle que résultant de l'algorithme de décomposition bidimensionnelle. Une autre méthode de réduction maximale aussi possible consiste à ne garder pour chaque valeur de la distance d'éloignement dₑ, que la valeur du décalage fréquentiel Δf qui correspond au centre d'un pic de la distribution d'estimation S(dₑ,Δf), en fonction du décalage fréquentiel Δf et séparément pour chaque valeur de la distance d'éloignement dₑ. Par exemple, le centre de pic peut être déterminé à partir d'une section à mi-hauteur de ce pic, ou à partir d'un ajustement («fit» en anglais) du pic par un modèle de celui-ci.

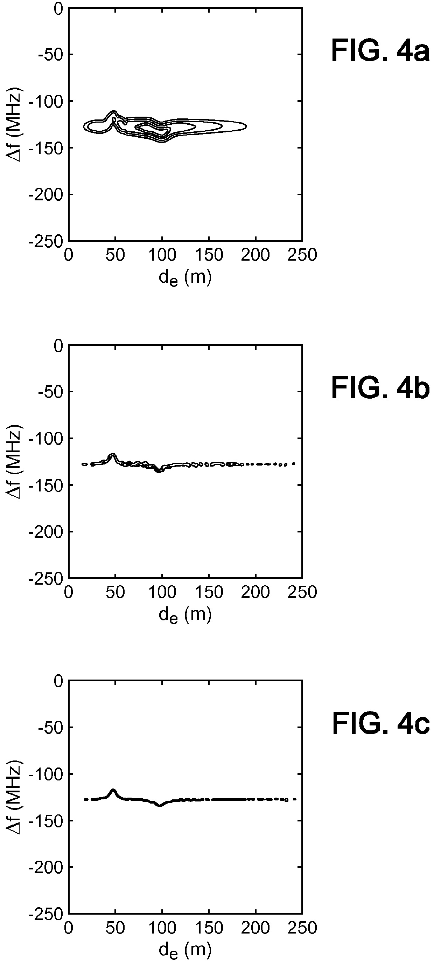

[Fig. 4a] est un premier diagramme tridimensionnel qui représente les variations du spectrogramme Sp(dₑ,Δf) tel que calculé à partir du signal de mesure SM délivré par la carte d'acquisition 8, pour une séquence d'acquisition utile effectuée avec un écoulement d'air dans la zone d'exploration ZE. L'axe horizontal du diagramme repère la distance d'éloignement dₑ, entre 0 et 250 m. L'axe vertical du diagramme repère le décalage fréquentiel Δf, entre -250 MHz et 0, et le troisième axe du diagramme, qui est associé aux lignes de niveau indiquées, repère les valeurs d'amplitude spectrale. Ce spectrogramme possède une largeur importante parallèlement à l'axe de décalage fréquentiel Δf, pour chaque valeur de la distance d'éloignement dₑ.

Les axes horizontaux et verticaux des diagrammes de [Fig. 4b] et [Fig. 4c] sont les mêmes que ceux de [Fig. 4a].

[Fig. 4b] est un deuxième diagramme tridimensionnel qui représente les variations de la distribution d'estimation S(dₑ,Δf) telle que résultant de l'algorithme de décomposition bidimensionnelle appliqué au spectre de [Fig. 1a]. Les valeurs de S(dₑ,Δf) sont donc repérées par le troisième axe du diagramme, perpendiculaire aux axes de distance d'éloignement dₑ et de décalage fréquentiel Δf. Pour chaque valeur de la distance d'éloignement dₑ, la largeur en décalage fréquentiel Δf est nettement diminuée.

[Fig. 4c] est un troisième diagramme tridimensionnel qui représente les variations de la distribution d'estimation S(dₑ,Δf) après que cette distribution a été limitée à sa valeur maximale parallèlement à l'axe de décalage fréquentiel Δf pour chaque valeur de la distance d'éloignement dₑ. Ce résultat de mesure RM montre que l'air se déplace en se rapprochant du système 10, localement dans une première région correspondant à dₑ environ égale à 45 m, et se déplace simultanément dans une seconde zone correspondant à dₑ environ égale à 100 m mais cette fois en s'éloignant du système 10. Ces régions de déplacement d'air correspondent à deux vortex quasi-synchrones d'une structure turbulente de Von Karman à bas régime d'écoulement, dont les axes de vortex sont perpendiculaires à la direction d'émission des impulsions laser par le système 10, et qui ont été traversés à distance de leurs axes de vortex respectifs par les impulsions laser. Le décalage fréquentiel général de -120 MHz qui apparaît dans les trois diagrammes de [Fig. 4a]-[Fig. 4c] est le décalage fréquentiel qui est introduit par le modulateur acousto-optique 2, afin de permettre de différentier des valeurs de vitesse radiale positives et négatives à partir du signal de mesure SM.

Un algorithme de décomposition par ajustements parcimonieux. Un tel algorithme consiste à rechercher directement l'estimation de la distribution d'amplitude de rétrodiffusion S₀(dₑ,Δf) sous forme d'une valeur unique de décalage fréquentiel Δf - ou bien d'une valeur unique de vitesse radiale vᵣ - pour chaque valeur de la distance d'éloignement dₑ dans la zone d'exploration ZE. Il procède alors par des ajustements itératifs de ces valeurs Δf(dₑ), et de valeurs d'amplitude de rétrodiffusion qui sont aussi attribuées une-à-une aux valeurs de la distance d'éloignement dₑ. A chaque itération, un résultat du produit de convolution de la distribution d'estimation S(dₑ,Δf) qui est ainsi construite, par la réponse impulsionnelle h(Δdₑ,Δf), est comparé au spectrogramme Sp(dₑ,Δf) du signal de mesure SM. Puis l'ajustement est appliqué aux valeurs de décalage fréquentiel et d'amplitude de rétrodiffusion qui sont attribuées à l'une au moins des valeurs de distance d'éloignement, dans un sens qui réduit l'écart entre [S*h](dₑ,Δf) et Sp(dₑ,Δf). De telles itérations sont répétées jusqu'à ce qu'un critère de convergence soit satisfait. De façon connue, un critère à seuil peut être appliqué à l'écart entre [S*h](dₑ,Δf) et Sp(dₑ,Δf). Alternativement, un autre critère possible concerne une progression entre des itérations successives, de la réduction de l'écart entre [S*h](dₑ,Δf) et Sp(dₑ,Δf). L'utilisation d'un tel algorithme de décomposition par ajustements parcimonieux permet au résultat de mesure RM de mieux rendre compte de variations de la vitesse radiale vᵣ en fonction de la distance d'éloignement dₑ, qui correspondent à des fréquences spatiales élevées.

Afin de fournir une caractérisation plus complète d'une portion d'atmosphère tridimensionnelle, le système 10 peut être mobile, par exemple avec une orientation variable de la direction d'émission des impulsions laser, afin de réaliser un balayage dans la portion d'atmosphère. Alors, des séquences d'acquisition sont répétées en adoptant à chaque fois une nouvelle orientation du système 10.

Il est entendu que l'invention peut être reproduite en modifiant des aspects secondaires des modes de réalisation qui ont été décrits en détail ci-dessus, tout en conservant certains au moins des avantages cités. Notamment, toutes les valeurs numériques qui ont été données ne l'ont été qu'à titre d'illustration, et peuvent être changées en fonction de l'application considérée. Bien que l'application à une caractérisation d'écoulement fluide ait été prise pour exemple, l'invention peut être utilisée pour d'autres applications. En outre, l'invention peut être appliquée à un radar impulsionnel qui fonctionne dans le domaine des ondes radio, par exemple avec une valeur de longueur d'onde qui est comprise entre 1 mm et 7,5 mm pour le rayonnement de chaque impulsion.

## Revendications

1. Procédé de détection et télémétrie par impulsions de rayonnement électromagnétique, pour caractériser une distribution de vitesse radiale (vᵣ) en fonction d'une distance d'éloignement (dₑ) à l'intérieur d'une zone d'exploration (ZE), comprenant les étapes suivantes :
/1/ obtenir un système (10) de détection et télémétrie par impulsions de rayonnement électromagnétique, adapté pour, lors d'une séquence d'acquisition, émettre au moins une impulsion (P) d'un rayonnement électromagnétique, détecter une partie de ladite au moins une impulsion de rayonnement qui a été rétrodiffusée par au moins une cible (100) présente dans la zone d'exploration (ZE), et produire un signal de mesure (SM) qui correspond à la partie d'impulsion de rayonnement rétrodiffusée et détectée, ledit signal de mesure contenant des informations sur une distance d'éloignement (dₑ) et une vitesse radiale (vᵣ) de chaque cible, l'information sur la vitesse radiale de chaque cible correspondant à un décalage de fréquence dû à un effet Doppler qui se produit lorsque le rayonnement est rétrodiffusé par ladite cible ; et
/2/ effectuer une séquence d'acquisition en contrôlant le système (10) pour émettre l'au moins une impulsion (P) dans la zone d'exploration (ZE),
le procédé étant **caractérisé en ce qu'**il comprend en outre les étapes supplémentaires suivantes :
/3/ obtenir une caractérisation d'une réponse impulsionnelle du système (10), la réponse impulsionnelle correspondant au signal de mesure (SM) qui est produit par ledit système (10) lors d'une séquence d'acquisition et lorsqu'un élément rétrodiffusant unique se trouve dans la zone d'exploration (ZE), ledit élément rétrodiffusant unique correspondant à une valeur unique de distance d'éloignement (dₑ) et ayant une valeur connue de vitesse radiale (vᵣ) par rapport au système, et lorsque la zone d'exploration est dépourvue d'élément rétrodiffusant autre que ledit élément rétrodiffusant unique ; et
/4/ en considérant que le signal de mesure (SM) qui a été produit à l'étape /2/ est une somme de contributions qui correspondent chacune à la réponse impulsionnelle appliquée à une valeur pour la distance d'éloignement (dₑ) et à une valeur pour la vitesse radiale (vᵣ), et multipliée par une valeur d'amplitude de rétrodiffusion, obtenir par décomposition dudit signal de mesure en plusieurs contributions, un résultat de mesure (RM) sous forme de couples qui sont constitués chacun par une valeur d'amplitude de rétrodiffusion et une valeur de vitesse radiale, et qui sont attribués respectivement à plusieurs valeurs de la distance d'éloignement à l'intérieur de la zone d'exploration.

2. Procédé selon la revendication 1, suivant lequel la réponse impulsionnelle est une fonction d'une part de la distance d'éloignement (dₑ), ou d'une durée d'aller-retour du rayonnement à partir d'une sortie optique du système (10), et d'autre part de l'un parmi :
- une fréquence de composante spectrale de la partie d'impulsion de rayonnement qui a été rétrodiffusée puis détectée par le système (10) ;
- un écart de fréquence (Δf) entre une composante spectrale de la partie d'impulsion de rayonnement qui a été rétrodiffusée puis détectée par le système (10), et le rayonnement de chaque impulsion tel qu'émise par ledit système, ou une valeur de vitesse radiale (vᵣ) qui est associée audit écart de fréquence par effet Doppler ; et
- une fréquence d'un spectre du signal de mesure (SM) qui est utilisé à l'étape /3/.

3. Procédé selon la revendication 1 ou 2, suivant lequel la caractérisation de la réponse impulsionnelle est obtenue à l'étape /3/ en effectuant au moins une séquence d'acquisition avec le système (10) de détection et télémétrie par impulsions de rayonnement électromagnétique et avec un élément rétroréfléchissant unique qui est positionné à une distance d'éloignement (dₑ) déterminée dans la zone d'exploration (ZE), ou en effectuant une simulation numérique d'un fonctionnement du système (10) lorsqu'un élément rétroréfléchissant unique est présent à une distance d'éloignement déterminée dans la zone d'exploration.

4. Procédé selon l'une quelconque des revendications précédentes, suivant lequel le système (10) de détection et télémétrie par impulsions de rayonnement électromagnétique est adapté pour mettre en oeuvre un mode de détection hétérodyne, et le signal de mesure (SM) qui est produit à chaque séquence d'acquisition, et qui est utilisé à l'étape /4/, est un signal de mesure hétérodyne.

5. Procédé selon l'une quelconque des revendications précédentes, suivant lequel le système (10) de détection et télémétrie par impulsions de rayonnement électromagnétique est de type LIDAR, le rayonnement de chaque impulsion (P) qui est émise par ledit système étant un rayonnement laser, ou le système (10) de détection et télémétrie par impulsions de rayonnement électromagnétique est de type RADAR, le rayonnement de chaque impulsion (P) qui est émise par ledit système ayant une longueur d'onde dans le vide comprise entre 1 mm et 7,5 mm.

6. Procédé selon la revendication 5, suivant lequel le système (10) de détection et télémétrie par impulsions de rayonnement électromagnétique est de type LIDAR, et suivant lequel chaque impulsion (P) de rayonnement possède l'une au moins des caractéristiques suivantes :
- une longueur d'onde du rayonnement à l'intérieur de l'impulsion (P) est comprise entre 250 nm et 10 µm ;
- une durée de l'impulsion (P) est comprise entre 50 ns et 1 µs ; et
- l'impulsion (P) possède une largeur fréquentielle à mi-hauteur, qui est inférieure à 1 GHz, de préférence inférieure à 20 MHz.

7. Procédé selon l'une quelconque des revendications 1 à 6, suivant lequel le résultat de mesure (RM) est déduit du signal de mesure (SM) à l'étape /4/ en appliquant un algorithme de décomposition bidimensionnelle qui utilise une méthode sélectionnée dans la liste comprenant une méthode de maximum a posteriori, une méthode de maximum de vraisemblance, et une méthode stochastique, notamment une méthode de Monte Carlo à Chaînes de Markov.

8. Procédé selon la revendication 7, comprenant en outre une étape supplémentaire qui est exécutée à partir du résultat de mesure (RM) fourni par l'algorithme de décomposition bidimensionnelle, pour réduire des largeurs de distributions de vitesse radiale (vᵣ) qui sont attribuées séparément à plusieurs valeurs de la distance d'éloignement (dₑ) dans la zone d'exploration (ZE).

9. Procédé selon l'une quelconque des revendications 1 à 6, suivant lequel l'étape /4/ comprend d'attribuer une valeur unique de vitesse radiale (vᵣ) et une valeur unique d'amplitude de rétrodiffusion à chaque valeur de la distance d'éloignement (dₑ), pour un échantillonnage de valeurs de la distance d'éloignement à l'intérieur de la zone d'exploration (ZE), puis de calculer une reconstruction du signal de mesure comme une somme de contributions chacune égale à la réponse impulsionnelle appliquée à une valeur de distance d'éloignement et à la valeur de vitesse radiale qui a été attribuée à ladite valeur de distance d'éloignement, et multipliée par la valeur d'amplitude de rétrodiffusion qui a été aussi attribuée à la même valeur de distance d'éloignement, pour toutes les valeurs de la distance d'éloignement dans l'échantillonnage, et de réaliser ensuite des ajustements itératifs des valeurs attribuées de vitesse radiale et d'amplitude de rétrodiffusion de façon à réduire un écart entre le signal de mesure qui a été produit à l'étape /2/ et la reconstruction du signal de mesure qui résulte des valeurs attribuées de vitesse radiale et d'amplitude de rétrodiffusion,
le résultat de mesure (RM) étant alors formé par les valeurs de vitesse radiale (vᵣ) et d'amplitude de rétrodiffusion attribuées aux valeurs de distance d'éloignement (dₑ), qui procurent un écart minimal entre le signal de mesure (SM) et la reconstruction du signal de mesure.

10. Procédé selon l'une quelconque des revendications précédentes, utilisé pour l'une au moins des applications suivantes :
- des mesures météorologiques, par exemple des mesures de turbulences atmosphériques ;
- des mesures de diffusion de polluants atmosphériques ;
- des mesures de concentration locale pour des particules rétrodiffusantes en suspension dans un milieu, ou pour des composés chimiques qui absorbent et réémettent le rayonnement des impulsions ;
- des mesures de cisaillement d'un écoulement atmosphérique, par exemple au niveau d'un aéroport ;
- des mesures de position et/ou de durée de vie d'au moins un vortex qui est présent dans un écoulement de fluide ;
- des mesures anémométriques qui sont effectuées à partir d'un aéronef en vol, notamment à partir d'un dirigeable ou d'un drone ;
- des mesures anémométriques qui sont effectuées pour optimiser un fonctionnement d'éolienne ; et
- des mesures anémométriques qui sont effectuées pour ajuster un vol d'aéronef en formation, ou pour ajuster un vol de drone.

11. Système (10) de détection et télémétrie par impulsions de rayonnement électromagnétique comprenant :
- une voie d'émission (10E), adaptée pour émettre au moins une impulsion (P) de rayonnement électromagnétique dans une zone d'exploration (ZE) lorsqu'une séquence d'acquisition est effectuée ;
- une voie de détection (10D), adaptée pour détecter, pendant la séquence d'acquisition, une partie de ladite au moins une impulsion (P) de rayonnement qui a été émise, après que cette partie d'impulsion de rayonnement a été rétrodiffusée par au moins une cible (100) présente dans la zone d'exploration (ZE), ladite voie de détection étant adaptée en outre pour produire un signal de mesure (SM) qui contient des informations sur une distance d'éloignement (dₑ) et une vitesse radiale (vᵣ) de chaque cible (100) présente dans la zone d'exploration, l'information sur la vitesse radiale de chaque cible correspondant à un décalage de fréquence dû à un effet Doppler qui se produit lorsque le rayonnement est rétrodiffusé par ladite cible ; et
- un contrôleur (9), qui est agencé pour activer les voies d'émission (10E) et de détection (10D) conformément à la séquence d'acquisition,
**caractérisé en ce qu'**il comprend en outre :
- des moyens de stockage (12) d'une caractérisation d'une réponse impulsionnelle du système (10), ladite réponse impulsionnelle correspondant au signal de mesure (SM) qui est produit par ledit système lors d'une séquence d'acquisition, lorsqu'un élément rétrodiffusant unique se trouve dans la zone d'exploration (ZE), ledit élément rétrodiffusant unique correspondant à une valeur unique de la distance d'éloignement (dₑ) et ayant une valeur de vitesse radiale (vᵣ) par rapport au système, et lorsque la zone d'exploration est dépourvue d'élément rétrodiffusant autre que ledit élément rétrodiffusant unique ; et
- des moyens de calcul (11), adaptés pour décomposer le signal de mesure (SM) comme une somme de contributions qui correspondent chacune à la réponse impulsionnelle appliquée à une valeur pour la distance d'éloignement (dₑ) et à une valeur pour la vitesse radiale (vᵣ), et multipliée par une valeur d'amplitude de rétrodiffusion, de façon à délivrer un résultat de mesure (RM) sous forme de couples qui sont constitués chacun par une valeur d'amplitude de rétrodiffusion et une valeur de vitesse radiale, et qui sont attribués respectivement à plusieurs valeurs de la distance d'éloignement à l'intérieur de la zone d'exploration (ZE).

12. Système (10) selon la revendication 11, adapté pour mettre en oeuvre un procédé qui est conforme à l'une quelconque des revendications 1 à 10.

## Patentansprüche

1. Verfahren zur Erfassung und Telemetrie durch elektromagnetische Strahlungsimpulse, um eine radiale Geschwindigkeitsverteilung (vᵣ) in Abhängigkeit von einem Entfernungsabstand (dₑ) innerhalb einer Erkundungszone (ZE) zu charakterisieren, umfassend die folgenden Schritte:
/1/ Erhalten eines Systems (10) zur Erfassung und Telemetrie durch elektromagnetische Strahlungsimpulse, welches dazu ausgebildet ist, während einer Erfassungssequenz wenigstens einen Impuls (P) einer elektromagnetischen Strahlung auszusenden, einen Teil des wenigstens einen Strahlungsimpulses zu erfassen, der von wenigstens einem Ziel (100), das sich in der Erkundungszone (ZE) befindet, rückgestreut wurde, und ein Messsignal (SM) zu erzeugen, das dem rückgestreuten und erfassten Teil des Strahlungsimpulses entspricht, wobei das Messsignal Informationen zu einem Entfernungsabstand (dₑ) und eine Radialgeschwindigkeit (vᵣ) jedes Ziels umfasst, wobei die Informationen zur Radialgeschwindigkeit jedes Ziels einer Frequenzverschiebung aufgrund eines Dopplereffekts entsprechen, der auftritt, wenn die Strahlung von dem Ziel rückgestreut wird ; und
/2/ Durchführen einer Erfassungssequenz durch Steuern des Systems (10), um den wenigstens einen Impuls (P) in die Erkundungszone (ZE) zu senden, wobei das Verfahren **dadurch gekennzeichnet ist, dass** es ferner die folgenden zusätzlichen Schritte umfasst:
/3/ Erhalten einer Charakterisierung einer Impulsantwort des Systems (10), wobei die Impulsantwort dem Messsignal (SM) entspricht, das von dem System (10) während einer Erfassungssequenz erzeugt wird, und wenn sich ein einzelnes Rückstreuelement in der Erkundungszone (ZE) befindet, wobei das einzelne Rückstreuelement einem einzelnen Wert des Entfernungsabstands (dₑ) entspricht und einen bekannten Wert der Radialgeschwindigkeit (vᵣ) in Bezug auf das System aufweist, und wenn die Erkundungszone kein anderes Rückstreuelement als das einzelne Rückstreuelement aufweist; und
/4/ unter der Annahme, dass das Messsignal (SM), das in Schritt /2/ erzeugt wurde, eine Summe von Beiträgen ist, die jeweils der Impulsantwort entsprechen, die auf einen Wert des Entfernungsabstands (dₑ) und einen Wert für die Radialgeschwindigkeit (vᵣ) angewendet und mit einem Wert für die Rückstreuamplitude multipliziert wird, Erhalten eines Messergebnisses (RM) in Form von Paaren, die jeweils aus einem Wert für die Rückstreuamplitude und einem Wert für die Radialgeschwindigkeit bestehen und die jeweils mehreren Werten des Entfernungsabstands innerhalb der Erkundungszone zugeordnet werden, durch Zerlegung des Messsignals in mehrere Beiträge.

2. Verfahren nach Anspruch 1, bei dem die Impulsantwort eine Funktion einerseits des Entfernungsabstands (dₑ) oder einer Dauer des Hin- und Herlaufens der Strahlung von einem optischen Ausgang des Systems (10) ist und andererseits eines der folgenden Elemente ist:
- eine Frequenz der spektralen Komponente des Teils des Strahlungsimpulses, der rückgestreut und dann vom System (10) erfasst wurde;
- eine Frequenzabweichung (Δf) zwischen einer Spektralkomponente des Teils der Strahlungsimpulse, der rückgestreut und dann von dem System (10) erfasst wurde, und der Strahlung jedes Impulses, wie er von dem System ausgesendet wird, oder eines Wertes der Radialgeschwindigkeit (vᵣ), der mit der Frequenzabweichung durch den Dopplereffekt verbunden ist; und
- einer Frequenz eines Spektrums des Messsignals (SM), das in Schritt /3/ verwendet wird.

3. Verfahren nach Anspruch 1 oder 2, bei dem die Charakterisierung der Impulsantwort in Schritt /3/ erhalten wird, indem wenigstens eine Erfassungssequenz mit dem System (10) zur Erfassung und Telemetrie elektromagnetischer Strahlungsimpulse und mit einem einzelnen Reflexionselement durchgeführt wird, das mit einem bestimmten Entfernungsabstand (dₑ) in der Erkundungszone (ZE) positioniert ist, oder durch Durchführen einer numerischen Simulation eines Betriebs des Systems (10), wenn sich ein einzelnes reflektierendes Element mit einer bestimmten Entfernung in der Erkundungszone befindet.

4. Verfahren nach einem der vorhergehenden Ansprüche, bei dem das System (10) zur Erfassung und Telemetrie durch elektromagnetische Strahlungsimpulse derart ausgebildet ist, dass es einen Heterodyne-Erfassungsmodus implementiert, und das Messsignal (SM), das in jeder Erfassungssequenz erzeugt und in Schritt /4/ verwendet wird, ein Heterodyne-Messsignal ist.

5. Verfahren nach einem der vorhergehenden Ansprüche, bei dem das System (10) zur Erfassung und Telemetrie durch elektromagnetische Strahlungsimpulse vom Typ LIDAR ist, wobei die Strahlung jedes Impulses (P), der von dem System ausgesendet wird, eine Laserstrahlung ist, oder das System (10) zur Erfassung und Telemetrie durch elektromagnetische Strahlungsimpulse vom Typ RADAR ist, wobei die Strahlung jedes Impulses (P), der von dem System ausgesendet wird, eine Vakuumwellenlänge zwischen 1 mm und 7,5 mm aufweist.

6. Verfahren nach Anspruch 5, bei dem das System (10) zur Erfassung und Telemetrie elektromagnetischer Strahlungsimpulse vom Typ LIDAR ist und bei dem jeder Strahlungsimpuls (P) wenigstens eines der folgenden Merkmale aufweist:
- eine Wellenlänge der Strahlung innerhalb des Impulses (P) liegt zwischen 250 nm und 10 µm;
- eine Dauer des Impulses (P) liegt zwischen 50 ns und 1 µs; und
- der Impuls (P) hat eine halbhohe Frequenzbreite, die kleiner als 1 GHz, bevorzugt kleiner als 20 MHz, ist.

7. Verfahren nach einem der Ansprüche 1 bis 6, bei dem das Messergebnis (RM) aus dem Messsignal (SM) in Schritt /4/ durch Anwendung eines zweidimensionalen Zerlegungsalgorithmus abgeleitet wird, der ein Verfahren verwendet, das aus der Liste gewählt wird, umfassend ein Maximum-a-posteriori-Verfahren, ein Maximum-Likelihood-Verfahren und ein stochastisches Verfärben, insbesondere ein Markow-Chain-Monte-Carlo-Verfahren.

8. Verfahren nach Anspruch 7, ferner umfassend einen zusätzlichen Schritt, der anhand des vom zweidimensionalen Zerlegungsalgorithmus gelieferten Messergebnisses (RM) ausgeführt wird, um die Breiten der Radialgeschwindigkeitsverteilungen (vᵣ) zu reduzieren, die separat mehreren Werten des Entfernungsabstands (dₑ) in der Erkundungszone (ZE) zugeordnet werden können.

9. Verfahren nach einem der Ansprüche 1 bis 6, wobei Schritt /4/ das Zuordnen eines einzelnen Radialgeschwindigkeitswerts (vᵣ) und eines einzelnen Werts der Rückstreuamplitude zu jedem Wert des Entfernungsabstands (dₑ) für eine Stichprobe von Werten des Entfernungsabstands innerhalb der Erkundungszone (ZE) umfasst, und dann Berechnen einer Rekonstruktion des Messsignals als eine Summe von Beiträgen, die jeweils gleich der Impulsantwort sind, die auf einen Entfernungswert angewendet wird, und auf den Radialgeschwindigkeitswert, der dem Entfernungswert zugeordnet wurde, und multipliziert mit dem Wert der Rückstreuamplitude, der ebenfalls demselben Entfernungswert zugeordnet wurde, für alle Entfernungswerte in der Stichprobe, und dann Durchführen iterativer Anpassungen der Attributwerte der Radialgeschwindigkeit und der Rückstreuamplitude, um eine Abweichung zwischen dem in Schritt /2/ erzeugten Messsignal und der Rekonstruktion des Messsignals, das aus den Attributwerten der Radialgeschwindigkeit und der Rückstreuamplitude resultiert, zu verringern, wobei das Messergebnis (RM) dann durch die Werte der Radialgeschwindigkeit (vr) und der Rückstreuamplitude gebildet wird, die den Werten des Entfernungsabstands (de) zugeordnet sind, die eine minimale Abweichung zwischen dem Messsignal (SM) und der Rekonstruktion des Messsignals bewirken.

10. Verfahren nach einem der vorhergehenden Ansprüche, welches für wenigstens eine der folgenden Anwendungen verwendet wird:
- meteorologische Messungen, z. B. Messungen atmosphärischer Turbulenzen;
- Messungen der Diffusion von Luftschadstoffen;
- Messungen der lokalen Konzentration für rückstreuende Partikel, die in einem Medium suspendiert sind, oder für chemische Verbindungen, die Impulsstrahlung absorbieren und wieder abgeben;
- Messungen der Scherung einer atmosphärischen Strömung, z. B. an einem Flughafen;
- Messungen der Position und/oder der Lebensdauer wenigstens eines Wirbels, der in einem Fluidstrom vorhanden ist;
- anemometrische Messungen, die von einem fliegenden Flugkörper aus durchgeführt werden, insbesondere von einem Luftschiff oder einer Drohne aus;
- anemometrische Messungen, die durchgeführt werden, um den Betrieb von Windkraftanlagen zu optimieren; und
- anemometrische Messungen, die durchgeführt werden, um den Flug eines Luftschiffs oder den Flug einer Drohne anzupassen.

11. System (10) zur Erfassung und Telemetrie durch elektromagnetische Strahlungsimpulse, umfassend:
- einen Sendekanal (10E), der dazu ausgebildet ist, wenigstens einen Impuls (P) elektromagnetischer Strahlung in einer Erkundungszone (ZE) auszusenden, wenn eine Erfassungssequenz ausgeführt wird;
- einen Erfassungskanal (10D), der dazu ausgebildet ist, während der Erfassungssequenz einen Teil des wenigstens einen Strahlungsimpulses (P), der ausgesendet wurde, zu erfassen, nachdem dieser Teil des Strahlungsimpulses von wenigstens einem Ziel (100), das sich in der Erkundungszone (ZE) befindet, rückgestreut wurde, wobei der Erfassungskanal ferner dazu ausgebildet ist, ein Messsignal (SM) zu erzeugen, das Informationen zu einem Entfernungsabstand (dₑ) und eine Radialgeschwindigkeit (vᵣ) jedes Ziels (100) umfasst, das sich in der Erfassungszone befindet, wobei die Informationen zur Radialgeschwindigkeit jedes Ziels einer Frequenzverschiebung aufgrund eines Dopplereffekts entsprechen, der auftritt, wenn die Strahlung von dem Ziel rückgestreut wird; und
- eine Steuerung (9), die dazu angeordnet ist, die Sende- (10E) und Erfassungskanäle (100) entsprechend der Erfassungssequenz zu aktivieren, **dadurch gekennzeichnet, dass** sie ferner umfasst:
- Mittel zum Speichern (12) einer Charakterisierung einer Impulsantwort des Systems (10), wobei die Impulsantwort dem Messsignal (SM) entspricht, das von dem System während einer Erfassungssequenz erzeugt wird, wenn sich ein einzelnes rückstreuendes Element in der Erkundungszone (ZE) befindet, wobei das einzelne Rückstreuelement einem einzelnen Wert des Entfernungsabstands (dₑ) und einem Wert der Radialgeschwindigkeit (vᵣ) in Bezug auf das System entspricht, und wenn in der Erkundungszone kein anderes Rückstreuelement als das einzelne Rückstreuelement vorhanden ist; und
- Rechenmittel (11), die dazu ausgebildet sind, das Messsignal (SM) als eine Summe von Beiträgen zu zerlegen, die jeweils der Impulsantwort entsprechen, die auf einen Wert des Entfernungsabstands (dₑ) und einen Wert für die Radialgeschwindigkeit (vᵣ) angewendet und mit einem Wert für die Rückstreuamplitude multipliziert wird, um ein Messergebnis (RM) in Form von Paaren zu liefern, die jeweils aus einem Wert für die Rückstreuamplitude und einem Wert für die Radialgeschwindigkeit bestehen, und die jeweils mehreren Werten des Entfernungsabstands innerhalb der Erkundungszone (ZE) zugeordnet sind.

12. System (10) nach Anspruch 11, welches dazu ausgebildet ist, ein Verfahren nach einem der Ansprüche 1 bis 10 durchzuführen.

## Claims

1. A detection and telemetry process using electromagnetic radiation pulses, in order to characterize a radial velocity distribution (vᵣ) as a function of a separation distance (dₑ) within an exploration zone (ZE), comprising the following steps:
1) getting a system (10) for detection and telemetry by using electromagnetic radiation pulses, that is adapted for, during an acquisition sequence, emitting at least one electromagnetic radiation pulse (P), detecting a portion of said at least one radiation pulse which was backscattered by at least one target (100) present in the exploration zone (ZE), and producing a measurement signal (SM) which corresponds to the backscattered and detected radiation pulse portion, where said measurement signal contains information on a separation distance (dₑ) and a radial velocity (vᵣ) of each target, the information on the radial velocity of each target corresponding to a Doppler effect frequency shift which occurs when the radiation is backscattered by this target; and
2) performing an acquisition sequence by controlling the system (10) for emitting the at least one pulse (P) into the exploration (ZE),
the process being **characterized in that** it further comprises the following additional steps:
3) getting a characterization of a pulse response of the system (10), where the pulse response corresponds to the measurement signal (SM) which is produced by said system (10) during an acquisition sequence and when a single backscattering element is in the exploration zone (ZE), said single backscattering element corresponding to a single separation distance value (dₑ) and having a known radial velocity value (vᵣ) relative to the system, and when the exploration zone is devoid of backscattering element other than the so-called single backscattering element; and
4) by treating the measurement signal (SM) which was produced in step 2) as a sum of contributions which each correspond to the pulse response applied to a value for the separation distance (dₑ) and to a value for the radial velocity (vᵣ), and multiplied by a backscattering amplitude value, getting by decomposition of the measurement signal into several contributions, a measurement result (RM) in a form of pairs which are each comprised of a backscattering amplitude value and a radial velocity value, and which are assigned respectively to several separation distance values within the exploration zone.

2. The process according to claim 1, wherein the pulse response is a function of both the separation distance (dₑ), or round-trip time of the radiation from an optical outlet of the system (10), and also of one among:
- a spectral component frequency of the radiation pulse portion which was backscattered and then detected by the system (10);
- a frequency shift (Δf) between a spectral component of the radiation pulse portion which was backscattered and then detected by the system (10), and the radiation of each pulse as emitted by said system, or a radial velocity value (vᵣ) associated with said Doppler effect frequency shift; and
- a frequency of a spectrum of the measurement signal (SM) which is used in step 3).

3. The process according to claim 1 or 2, wherein the characterization of the pulse response is obtained in step 3) by performing at least one acquisition sequence with the detection and telemetry system (10) by using electromagnetic radiation pulses, and with a single backscattering element which is positioned at a determined separation distance (dₑ) in the exploration zone (ZE),
or by performing a numerical simulation of operation of the system (10) when a single backscattering element is present at a determined separation distance in the exploration zone.

4. The process according to any one of the preceding claims, wherein the detection and telemetry system (10) by using electromagnetic radiation pulses is adapted for implementing a heterodyne detection mode, and the measurement signal (SM) which is produced at each acquisition sequence and which is used in step 4), is a heterodyne measurement signal.

5. The process according to any one of the preceding claims, wherein the detection and telemetry system (10) by using electromagnetic radiation pulses is of LIDAR type and the radiation of each pulse (P) emitted by said system is a laser radiation, or
the detection and telemetry system (10) by using electromagnetic radiation pulses is of RADAR type and the radiation of each pulse (P) emitted by said system has a in-vacuum wavelength comprised between 1 mm and 7.5 mm.

6. The process according to claim 5, wherein the detection and telemetry system (10) by using electromagnetic radiation pulses is of LIDAR type, and wherein each radiation pulse (P) has at least one of the following features:
- a radiation wavelength inside the pulse (P) is comprised between 250 nm and 10 µm;
- a duration of the pulse (P) is comprised between 50 ns and 1 µs; and
- the pulse (P) has a frequency width at half-maximum which is less than 1 GHz, preferably less than 20 MHz.

7. The process according to any one of claims 1 to 6, wherein the measurement result (RM) is deduced from the measurement signal (SM) in step 4) by applying a two-dimensional decomposition algorithm which uses a method selected in the list comprising a a-posteriori maximum method, a maximum likelihood method, and a stochastic method, in particular a Markov chain Monte Carlo method.

8. The process according to claim 7, further comprising an additional step which is executed from the measurement result (RM) provided by the two-dimensional decomposition algorithm, in order to reduce widths of radial velocity (vᵣ) distributions which are separately assigned to several values of the separation distance (dₑ) in the exploration zone (ZE).

9. The process according to any one of claims 1 to 6, wherein step 4) includes assigning a single radial velocity value (vᵣ) and a single backscattering amplitude value to each value of the separation distance (dₑ), for a sampling of values of the separation distance inside the exploration zone (ZE), and then calculating a reconstruction of the measurement signal as a sum of contributions each equal to the pulse response applied to a separation distance value and to the radial velocity value which was assigned to said separation distance value, and multiplied by the backscattering amplitude value which was also assigned to the same separation distance value, for all the separation distance values in the sampling, and then performing a series of iterative adjustments of the assigned radial velocity and backscattering amplitude values, so as to reduce a deviation between the measurement signal which was produced in step 2) and the reconstruction of the measurement signal resulting from the values assigned to the radial velocity and backscattering amplitude,
wherein the measurement result (RM) is then formed by the radial velocity (vᵣ) and backscattering amplitude values assigned to the separation distance values (dₑ), which provide a minimum deviation between the measurement signal (SM) and the reconstruction of the measurement signal.

10. The process according to any one of the preceding claims, used for at least one of the following applications:
- meteorological measurements, for example measurements of atmospheric turbulence;
- measurements of diffusion of atmospheric pollutants;
- measurements of local concentration of backscattering particles suspended in a medium, or of chemical compounds which absorb and re-emit the radiation of the pulses;
- measurements of shearing of an atmospheric flow, for example at an airport;
- measurements of position and/or lifetime of at least one vortex which is present in a fluid flow;
- anemometric measurements which are performed from an aircraft in flight, in particular from an airship or a drone;
- anemometric measurements which are performed to optimize operation of a wind turbine; and
- anemometrical measurements which are performed for adjusting in-formation aircraft flight, or for adjusting a drone flight.

11. A detection and telemetry system (10) by using electromagnetic radiation pulses comprising:
- an emission path (10E), adapted for emitting at least one electromagnetic radiation pulse (P) into an exploration zone (ZE) when an acquisition sequence is performed;
- a detection path (10D), adapted for detecting, during the acquisition sequence, a portion of said at least one emitted radiation pulse (P) after that portion of radiation pulse was backscattered by at least one target (100) present in the exploration zone (ZE), wherein said detection path is further adapted for producing a measurement signal (SM) which contains information about a separation distance (dₑ) and radial velocity (vᵣ) of each target (100) present in the exploration zone, the information about the radial velocity of each target corresponding to a Doppler effect frequency shift which occurs when the radiation is backscattered by said target; and
- a controller (9), which is arranged for activating the emission path (10E) and detection path (10D) according to the acquisition sequence,
**characterized in that** it further comprises:
- storage means (12) for storing a characterization of a pulse response of the system (10), where said pulse response corresponds to the measurement signal (SM) which is produced by said system during an acquisition sequence when a single backscattering element is in the exploration zone (ZE), said single backscattering element corresponding to a single separation distance value (dₑ) and having a radial velocity value (vᵣ) relative to the system, and when the exploration zone is devoid of backscattering element other than the so-called single backscattering element; and
- calculation means (11) adapted for decomposing the measurement signal (SM) as a sum of contributions which each correspond to the pulse response applied to a value for the separation distance (dₑ) and to a value for the radial velocity (vᵣ), and multiplied by a backscattering amplitude value, so as to output a measurement result (RM) in a form of pairs which are each comprised of a backscattering amplitude value and a radial velocity value, and which are assigned respectively to several separation distance values within the exploration zone (ZE).

12. The system (10) according to claim 11, adapted for implementing a process which conforms to any one of claims 1 to 10.
